# EUROPEAN PATENT SPECIFICATION

(11) **EP 4 184 706 B1**
(45) Date of publication and mention of the grant of the patent: **08.10.2025**
(21) Application number: 22736874.3
(22) Date of filing: 07.01.2022
(51) Int. Cl.: H01M 50/242, H01M 50/211, H01M 50/569, H01M 50/503, H01M 10/613, H01M 50/284, H01M 10/48, H01M 10/42, H01M 50/519, H01M 10/653, H01M 10/647, H01M 10/6554, H01M 50/264, H01M 50/298, H01M 50/514, H01M 50/548, H01M 50/557, H01M 10/04, H01M 10/6555

(54) **BATTERY MODULE, BATTERY PACK INCLUDING SAME, AND MANUFACTURING METHOD THEREOF**
BATTERIEMODUL, BATTERIEPACK DAMIT UND HERSTELLUNGSVERFAHREN DAFÜR
MODULE DE BATTERIE, BLOC-BATTERIE COMPRENANT CELUI-CI, ET SON PROCÉDÉ DE FABRICATION

(30) Priority: 11.01.2021 KR 20210003178
(43) Date of publication of application: 24.05.2023
(73) Proprietor: LG Energy Solution, Ltd., Seoul 07335 (KR)
(72) Inventor: HAN, Honggoo, Daejeon 34122 (KR); SEONG, Junyeob, Daejeon 34122 (KR); PARK, Won Kyoung, Daejeon 34122 (KR); PARK, Subin, Daejeon 34122 (KR)
(74) Representative: Goddar, Heinz J.
(86) International application number: PCT/KR2022/000274
(87) International publication number: WO 2022/149897

(56) References cited:
- WO-A1-2020/262832
- CN-A- 109 428 026
- KR-A- 20110 072 910
- KR-A- 20160 043 038
- KR-A- 20170 066 896
- KR-A- 20210 000 551
- KR-B1- 102 032 356
- US-A1- 2006 093 890
- US-A1- 2014 087 231

## Description

### [TECHNICAL FIELD]

The present disclosure relates to a battery module and a battery pack including the same, and a manufacturing method of the same, and more particularly, to a battery module having improved productivity, a battery pack including the same, and a manufacturing method of the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, there is a growing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed between them, and a battery case which seals and houses the electrode assembly together with an electrolyte solution.

Generally, the lithium secondary battery may be classified based on the shape of the exterior material into a can type secondary battery in which the electrode assembly is built into a metal can, and a pouch-type secondary battery in which the electrode assembly is built into a pouch of an aluminum laminate sheet.

In the case of a secondary battery used for small-sized devices, two to three battery cells are arranged, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. In addition, one or more battery modules can be mounted together with various control and protection systems such as a BDU (Battery Disconnect Unit), a BMS (Battery Management System) and a cooling system to form a battery pack.

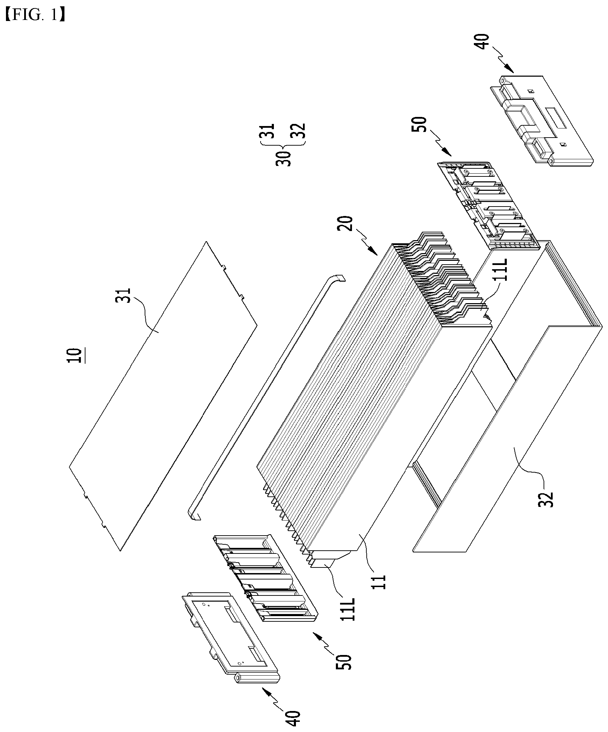

Fig. 1 is an exploded perspective view showing a conventional battery module.

Referring to Fig. 1, a conventional battery module 10 is formed by housing a battery cell stack 20 in a module frame 30 and an end plate 40.

The battery cell stack 20 is formed by stacking a plurality of battery cells 11 in one direction, so that the electrode lead 11L can protrude in a direction perpendicular to the one direction in which the battery cells 11 are stacked.

The module frame 30 may be made of a material having a predetermined strength in order to protect the battery cell stack 20 from external impacts, and the like, and is structurally formed by connecting the upper frame 31 and the lower frame 32. The corresponding edges of the upper frame 31 and the lower frame 32 may be weld-joined together.

The end plate 40 may be located in the protruding direction of the electrode lead 11L with respect to the battery cell stack 20, and a busbar frame 50 may be located between the battery cell stack 20 and the end plate 40. The module frame 30 and the end plate 40 can weld-join the corresponding corners to each other.

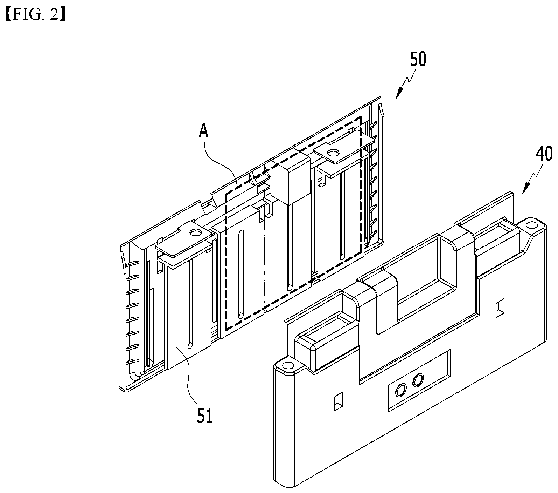

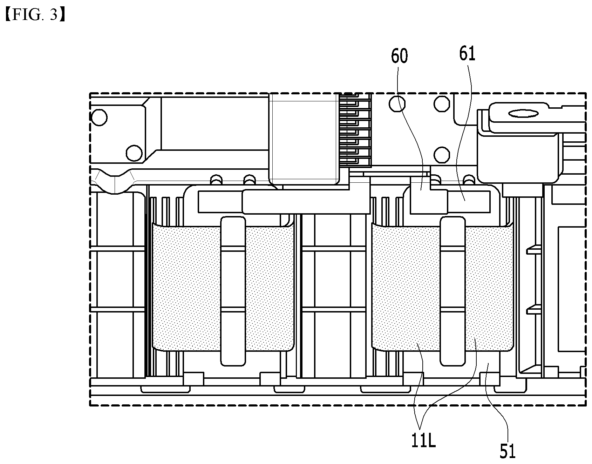

Fig. 2 is a perspective view which enlarges and shows the busbar frame 50 and the end plate 40 included in the battery module of Fig. 1, and Fig. 3 is a partial view which enlarges and shows a section "A" of Fig. 2. At this time, for convenience of explanation, Fig. 3 shows a state in which the electrode lead 11L of the battery cell 11 is included.

Referring to Figs. 1 to 3, a busbar 51 may be mounted on ae busbar frame 50. The busbar 51 is for electrical connection between a plurality of battery cells, and the electrode lead 11L of the battery cell 11 is bent after passing through a slit formed in the busbar frame 50 and can be connected to the busbar 51. In the connection between the electrode lead 11L and the busbar 51, the method is not limited as long as an electrical connection is possible, and as an example, it may be connected by a weld-joining. In this manner, the battery cell stack 20 to which the battery cells 11 are electrically connected via the busbar 51 may be connected to other battery modules or a BDU (Battery Disconnect Unit) via a terminal busbar or the like exposed to the outside. That is, the conventional battery module 10 electrically connects the battery cells via the busbar 51 and electrically connects the battery module 10 with other battery modules via a terminal busbar or the like, so that HV (High Voltage) connection can be implemented. Here, the HV connection is a connection that plays a role of a power source for supplying power, and means a connection between battery cells or a connection between battery modules.

Meanwhile, in order to prevent ignition or explosion of the battery module 10, it is necessary to measure the voltage information and temperature information of the battery cell and transmit it to the BMS (Battery Management System). The conventional battery module 10 includes a low voltage (LV) sensing assembly 60 and thus, can transmit voltage information of a battery cell to the BMS. Specifically, the LV sensing assembly 60 is connected to the busbar 51 via a joining member 61 to measure the voltage of each battery cell, and the measured value can be transmitted to an external BMS via a connector. That is, the conventional battery module 10 can implement a low voltage (LV) connection by transmitting voltage information via the busbar 51 and the LV sensing assembly 60. Here, the LV connection means a sensing connection for sensing and controlling the voltage of the battery cell.

Taken together, the conventional battery module 10 joins the electrode leads 11L of each stacked battery cell to the busbar 51 in order to realize HV connection, and the LV sensing assembly 60 can be connected to the busbar 51 to which the electrode lead 11L is joined, in order to realize LV connection. Further, the busbar frame 50 can be formed in order to mount such a busbar 51.

However, the battery module 10 requires many parts in order to realize such an HV connection and an LV connection, and has a drawback that a complicated series of manufacturing processes is required.

From CN 109 428 026 A there is known a battery module comprising a battery cell stack in which a plurality of battery cells including electrode leads are stacked; a first sensing block and a second sensing block that cover the front surface and the rear surface of the battery cell stack in which the electrode leads protrude, respectively and a member that covers the first sensing block, the second sensing block and both side surfaces of the battery cell stack, wherein at least two of the electrode leads are bent and joined after passing through a slit of the first sensing block or a slit of the second sensing block to form an electrode lead assembly, wherein the member covers the electrode lead assembly.

### [DETAILED DESCRIPTION OF THE INVENTION]

### [Technical Problem]

It is an object of the present disclosure to provide a battery module having improved productivity by improving the conventional HV connection structure and LV connection structure, a battery pack including the same and a manufacturing method of the same.

However, the problem to be solved by the embodiments of the present disclosure is not limited to the above-described problems, and can be variously expanded within the scope of the technical idea included in the present disclosure.

### [Technical Solution]

According to one embodiment of the present disclosure, there is provided a battery module as defined in claim 1.

The battery module may include an LV (Low Voltage) sensing assembly for transmitting voltage information of the battery cell, wherein the LV sensing assembly may be located in at least one of the first sensing block and the second sensing block.

The LV sensing assembly may be connected to the electrode lead assembly.

The LV sensing assembly may include an LV connector; a connection member that connects the LV connector and the electrode lead assembly; and a joining plate located at one end of the connection member and joined to the electrode lead assembly.

The connection member may be a flexible printed circuit board (FPCB) or a flexible flat cable (FFC).

According to another embodiment of the present disclosure, there is provided a battery pack comprising: the above-mentioned battery module; a pack frame that houses the battery module; and a thermal conductive resin layer that is located between the battery module and the bottom part of the pack frame, wherein the elastic member is opened in its lower part, so that the lower surface of the battery cell stack is exposed.

The lower surface of the battery cell stack may be in contact with the thermal conductive resin layer.

According to yet another embodiment of the present disclosure, there is provided a method for manufacturing a battery module, as defined in claim 8.

An LV (Low Voltage) sensing assembly for transmitting voltage information of the battery cell may be located in at least one of the first sensing block and the second sensing block.

The method for manufacturing a battery module may further include a step of connecting the LV sensing assembly and the electrode lead assembly.

The LV sensing assembly may include an LV connector; a connection member that connects the LV connector and the electrode lead assembly; and a joining plate located at one end of the connection member and joined to the electrode lead assembly, and in the step of connecting the LV sensing assembly and the electrode lead assembly, the joining plate may be joined to the electrode lead assembly.

### [Advantageous Effects]

According to embodiments of the present disclosure, the joint between the electrode leads and the joint between the electrode leads and the LV sensing assembly are integrally formed, instead of removing the conventional busbar, so that the HV connection and the LV connection can be performed at the same time, and thus, the productivity improvement can be expected.

Additionally, since the use of busbars is unnecessary, there is an advantage that the weight of the battery module is reduced and the manufacturing unit price is lowered.

Further, the HV connection and LV connection are performed on the sensing block, wherein by arranging an elastic member covering the sensing block, protection and fixation of the sensing block becomes possible.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view showing a conventional battery module;
Fig. 2 is a perspective view which enlarges and shows the busbar frame and the end plate included in the battery module of Fig. 1;
Fig. 3 is a partial view which enlarges and shows a section "A" of Fig. 2;
Fig. 4 is a perspective view showing a battery module according to an embodiment of the present disclosure;
Fig. 5 is an exploded perspective view of the battery module of Fig. 4;
Fig. 6 is a perspective view showing a battery cell included in the battery module of Fig. 5;
Fig. 7 is a partial perspective view which enlarges and shows a front portion of the battery module of Fig. 4;
Fig. 8 is a view of the front part of the battery module of Fig. 7 as viewed from the front;
Fig. 9 is a perspective view showing a battery cell stack and cooling fins included in the battery module of Fig. 5;
Fig. 10 is a perspective view showing a battery pack formed by gathering a plurality of battery modules of Fig. 4;
Fig. 11 is a cross-sectional view showing a cross section taken along the cutting line B-B' of Fig. 10; and
Figs. 12 to 14 are perspective views for explaining a method for manufacturing a battery module according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

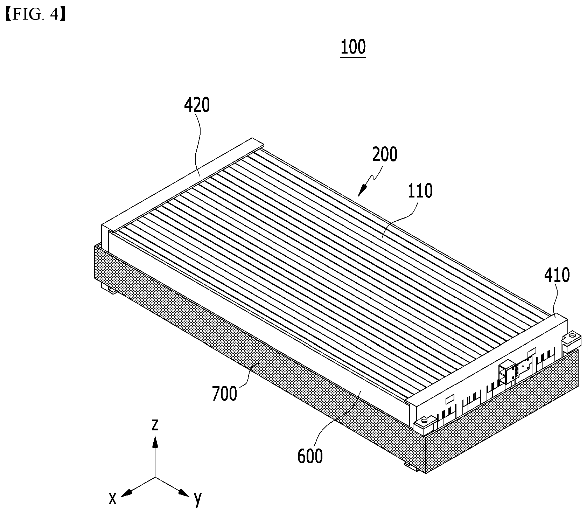

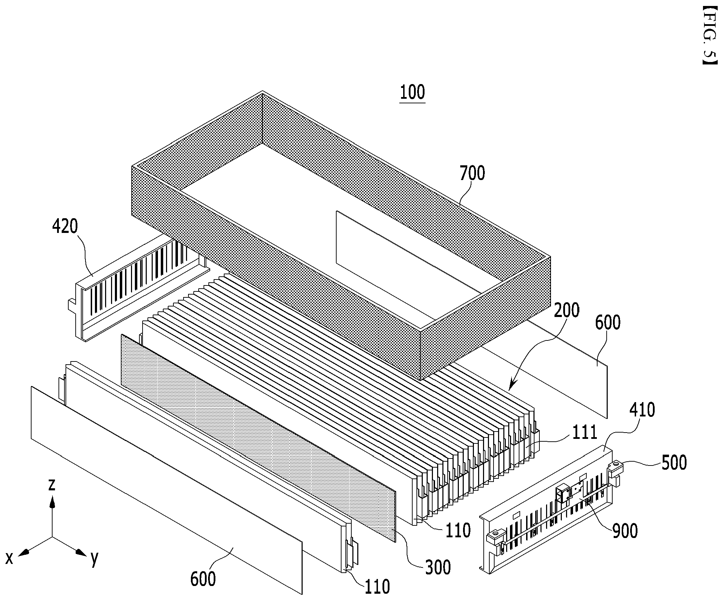

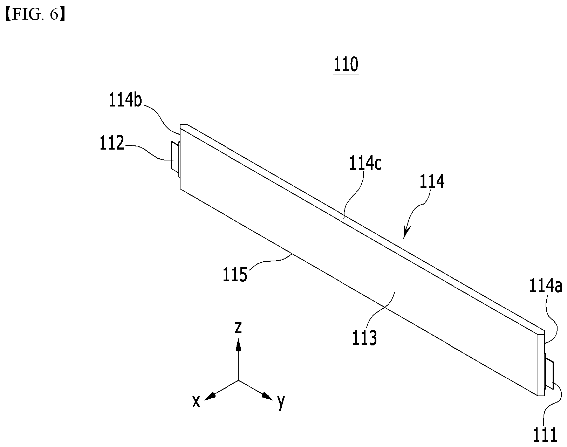

Fig. 4 is a perspective view showing a battery module according to an embodiment of the present disclosure. Fig. 5 is an exploded perspective view of the battery module of Fig. 4. Fig. 6 is a perspective view showing a battery cell included in the battery module of Fig. 5.

Referring to Figs. 4 to 6, the battery module 100 according to an embodiment of the present disclosure includes a battery cell stack 200 in which a plurality of battery cells 110 including electrode leads 111 and 112 are stacked; a first sensing block 410 and a second sensing block 420 that cover the front surface and the rear surface of the battery cell stack 200 from which the electrode leads 111 and 112 protrude, respectively; and an elastic member 700 that covers both side surfaces of the first sensing block 410, the second sensing block 420, and the battery cell stack 200. Here, the front surface means a surface of the battery cell stack 200 in the y-axis direction, the rear surface means a surface of the battery cell stack 200 in the -y-axis direction, and both side surfaces mean surfaces of the battery cell stack 200 in the x-axis and -x-axis directions, respectively. Further, the lower surface means a surface of the battery cell stack 200 in the -z-axis direction, the upper surface means a surface of the battery cell stack 200 in the z-axis direction. However, these are surfaces mentioned for convenience of explanation, and may vary depending on the position of a target object or the position of an observer. As described above, the front surface and the rear surface of the battery cell stack 200 may be surfaces on which the protruded electrode leads 111 and 112 of the battery cells 110 are located.

First, the battery cell 110 is preferably a pouch-type battery cell, and can be formed in a rectangular sheet-like structure. The battery cell 110 according to the present embodiment includes protruding first and second electrode leads 111 and 112. Specifically, the battery cell 110 according to the present embodiment has a structure in which first and second electrode leads 111 and 112 face each other with respect to the cell main body 113 and protrude from one end part 114a and the other end part 114b, respectively. More specifically, the first and second electrode leads 111 and 112 are connected to an electrode assembly (not shown), and are protruded from the electrode assembly (not shown) to the outside of the battery cell 110. The first and second electrode leads 111 and 112 have different polarities from each other, and as an example, one of them may be a cathode lead 111, and the other one may be the anode lead 112. That is, the cathode lead 111 and the anode lead 112 may protrude in mutually opposite directions with respect to one battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts, wherein the sealing parts have a structure that is sealed by a method such as heat-sealing, and the remaining other side part may be composed of a connection part 115. The cell case 114 may be composed of a laminated sheet including a resin layer and a metal layer.

The battery cell 110 may be configured in plural numbers, and the plurality of battery cells 110 can be stacked so as to be electrically connected to each other, thereby forming a battery cell stack 200. Particularly, as shown in Figs. 4 and 5, the plurality of battery cells 110 can be stacked along a direction parallel to the x-axis. Thereby, the first electrode lead 111 and the second electrode lead 112 may be protruded toward the y-axis direction and the -y-axis direction, respectively. That is, the first electrode lead 111 and the second electrode lead 112 may be located on the front surface and the rear surface of the battery cell stack 200.

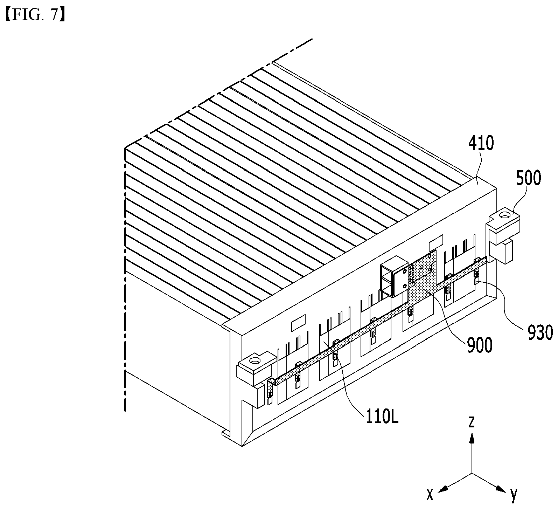

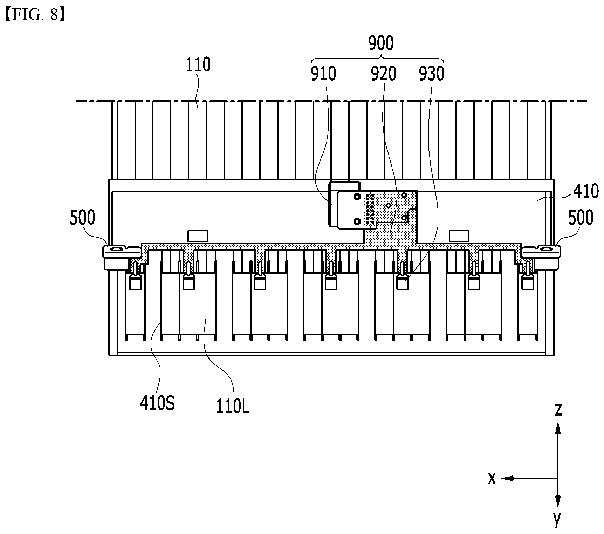

Next, the first sensing block and the second sensing block according to the present embodiment will be described in detail with reference to Figs. 7 and 8.

Fig. 7 is a partial perspective view which enlarges and shows a front portion of the battery module of Fig. 4. Fig. 8 is a view of the front part of the battery module of Fig. 7 as viewed from the front. However, Figs. 7 and 8 show the state in which the elastic member 700 of Fig. 4 is omitted for convenience of explanation.

Referring to Figs. 5 to 8 together, the first sensing block 410 and the second sensing block 420 cover the front surface and the rear surface of the battery cell stack 200 in which the electrode leads 111 and 112 protrude, respectively. More specifically, the first sensing block 410 may be located between the front surface of the battery cell stack 200 and the elastic member 700, and the second sensing block 420 may be located between the rear surface of the battery cell stack 200 and the elastic member 700. The elastic member 700 will be described later.

The first sensing block 410 and the second sensing block 420 may include a material having electrical insulation, and as an example, it may include a plastic material, a polymer material, or a composite material. Further, the first sensing block 410 and the second sensing block 420 may have a kind of basket shape, and can be configured so as to cover the front surface and the rear surface of the battery cell stack 200, respectively.

In the following, in order to avoid repetition of the description, the first sensing block 410 shown in Figs. 7 and 8 will be mainly described, but the same or similar structure can be applied to the second sensing block 420.

As described above, electrode leads 111 and 112 may be located on the front surface and the rear surface of the battery cell stack 200. A slit 410S may be formed in the first sensing block 410, and when the first sensing block 410 is arranged, the electrode leads 111 and 112 can pass through the slit 410S. Next, at least two electrode leads 111 and 112 may be bent and joined to form an electrode lead assembly 110L. Similarly, a slit is formed in the second sensing block 420, and the electrode lead passes through the slit and then is bent to form an electrode lead assembly.

More specifically, the electrode leads 111 and 112 protruding in the same direction with respect to the adjacent battery cells 110 are bent in a direction perpendicular to the protruding direction of the electrode leads 111 and 112, and are joined to each other to form an electrode lead assembly 110L. Thereby, one surface of the electrode lead assembly 110L may be perpendicular to a direction (y-axis direction) in which the electrode leads 111 and 112 protrude from the battery cell 110. In this case, electrode leads having the same polarity may be joined to each other, or electrode leads having different polarities may be joined to each other. In other words, in order to realize a parallel connection between the battery cells 110, electrode leads having the same polarity may be joined to each other, and in order to realize a series connection between the battery cells 110, electrode leads having different polarities may be joined to each other. This can vary depending on the design of the battery module.

Meanwhile, the electrode leads 111 and 112 of the battery cell 110 located outside the battery cell stack 200 may be connected to the terminal busbar 500. Unlike the conventional battery module 10 (see Figs. 1 to 3) in which the electrode leads are connected to each other via a busbar 51, the electrode leads 111 and 112 according to the present embodiment are directly joined to each other, and a part thereof can be connected to the terminal busbar 500 to form a HV (high voltage) connection. Here, the HV connection is a connection that serves as a power source for supplying power, and means a connection between battery cells or a connection between battery modules. Therefore, in the HV connection structure according to the present embodiment, the busbar and the busbar frame to which the busbar is mounted can be removed.

Meanwhile, the battery module 100 according to the present embodiment may include a low voltage (LV) sensing assembly 900 for transmitting voltage information of a battery cell. The LV sensing assembly 900 may be located in at least one of the first sensing block 410 and the second sensing block 420. Specifically, the LV sensing assembly 900 can be located on the opposite side of a surface facing the battery cell stack 200 among the first sensing block 410. Similarly, although not specifically shown in the figure, the LV sensing assembly 900 can be located on the opposite side of a surface facing the battery cell stack 200 among the second sensing block 420.

The LV sensing assembly 900 is for a low voltage (LV) connection, wherein the LV connection means a sensing connection for sensing and controlling a voltage of a battery cell. Voltage information and temperature information of the battery cell 110 can be transmitted to an external BMS (Battery Management System) via the LV sensing assembly 900. Such LV sensing assembly 900 can be connected to the electrode lead assembly 110L.

The LV sensing assembly 900 may include an LV connector 910, a connection member 920 for connecting the LV connector 910 and the electrode lead joined body 110L, and a joining plate 930 located at one end of the connection member 920 and joined to the electrode lead joined body 110L.

The LV connector 910 can be configured so as to transmit and receive signals to and from an external control device to control the plurality of battery cells 110. The connection member 920 may be a flexible printed circuit board (FPCB) or a flexible flat cable (FFC). Voltage and temperature information measured from the plurality of battery cells 110 may be transmitted to an external BMS (battery management system) via the connection member 920 and the LV connector 910. That is, the LV sensing assembly 900 including the LV connector 910 and the connection member 920 can detect and control phenomena such as overvoltage, overcurrent, and overheating of each battery cell 110. The joining plate 930 is located at one end of the connection member 920 and may be made of a metal material having electrical conductivity. By joining such a joining plate 930 to the electrode leads 111 and 112, the connection member 920 and the electrode lead 111 can be electrically and physically connected. Specifically, one side of the joining plate 930 passes through the connection member 920 and is then bent to thereby be coupled with the connection member 920, and the other side of the joining plate 930 can be formed in a plate shape to be joined, particularly weld-joined, to the electrode leads 111 and 112.

Meanwhile, as described above, the battery cells 110 may be stacked along the x-axis direction to form the battery cell stack 200, whereby the electrode leads 111 and 112 may protrude in the y-axis direction and the -y-axis direction, respectively. At this time, as described above, at least two electrode leads 111 and 112 may be bent and joined to form the electrode lead joined body 110L. The joining plate 930 of the LV sensing assembly 900 can be directly joined to the electrode lead joined body 110L, so that the LV sensing assembly 900 and the electrode leads 111 and 112 can be connected to each other.

In the joining between the electrode leads 111 and 112 for forming the electrode lead joined body 110L or the joining between the electrode lead joined body 110L and the joining plate 930, the joining method thereof is not particularly limited as long as electrical connection is possible, and as an example, the weld-joining can be performed. Further, the electrode leads 111 and 112 protruding in the y-axis direction are mainly described, but with respect to for the electrode leads 111 and 112 protruding in the -y axis direction, the structure of the electrode lead joined body and the LV sensing assembly 900 can be formed similarly.

In the conventional battery module 10, the electrode lead 11L is joined to the busbar 51 for HV connection, and separately from that, the LV sensing assembly 60 is connected to the busbar 51. On the other hand, in the battery module 100 according to the present embodiment, when the electrode lead assembly 110L is formed, the HV connection and the LV connection are not performed individually, but can be performed at once, so that productivity improvement can be expected. It has the advantage that the configuration of the busbar frame and the like can be removed and the battery module 100 of a more compact configuration can be manufactured.

In addition, since it is unnecessary to use the busbar, the busbar or the busbar frame can be removed. Further, since the conventional busbar frame 50 and the end plate 40 are replaced with first and second sensing blocks 410 and 420 and an elastic member 700 described later, there is an advantage that the weight of the battery module 100 is lightened and the manufacturing unit price thereof is lowered.

On the other hand, the first sensing block 410 and the second sensing block 420 according to the present embodiment guide the HV connection and LV connection of the battery module 100, and at the same time, have a predetermined strength, and therefore, can play a role of protecting the battery cells 110.

Next, the elastic member 700 will be described in detail.

Referring back to Figs. 4 and 5, the elastic member 700 according to the present embodiment may be continuously connected along the front surface, the rear surface, and both side surfaces of the battery cell stack 200. More specifically, the elastic member 700 may be continuously connected along both side surfaces of the first sensing block 410, the second sensing block 420, and the battery cell stack 200. In the process of repeatedly charging and discharging a plurality of battery cells 110, a phenomenon in which the internal electrolyte decomposes to generate gas and the battery cell 110 swells, that is, a swelling phenomenon, may occur. In particular, each battery cell 110 may cause swelling in the stacking direction of the battery cells 110 (direction parallel to the x-axis). In the present embodiment, since the elastic member 700 having elasticity is continuously connected along the front surface, the rear surface and the both side surfaces of the battery cell stack 200, swelling of the battery cells 110 can be suppressed, and deformation of the battery module 100 in the stacking direction of the battery cells 110 can be minimized.

Meanwhile, as shown in Figs. 4 and 5, the elastic member 700 according to the present embodiment may cover the electrode leads 111 and 112, that is, the electrode lead joined body 110L. Structurally, the electrode lead joined body 110L is located outside the first sensing block 410 or the second sensing block 420. The elastic member 700 covers the electrode lead joined body 110L, so that the electrode lead joined body 110L can be protected from the external environment.

That is, the battery module including the first sensing block 410, the second sensing block 420, and the elastic member 700 according to the present embodiment can form a module-less structure in which the conventional module frame 30 (see Fig. 1) and the end plate 40 (see Fig. 1) are removed. The battery module 100 can maintain and fix its shape by the first sensing block 410, the second sensing block 420, and the elastic member 700 instead of the module frame 30 or the end plate 40. As the module frame and end plate are removed, complicated processes that require precise control, such as a process of housing the battery cell stack 200 in the module frame or a process of assembling the module frame and the end plate, are unnecessary. Additionally, it has the advantage that the weight of the battery module 100 can be greatly reduced by the removed module frame and end plate. Further, the battery module 100 according to the present embodiment has the advantage that as the module frame is removed, it is easy to rework during the battery pack assembly process, but this can be distinguished from a conventional battery module 10 having a module frame in which it is not possible to rework even if a defect occurs in the welding of the module frame 30 itself or the welding between the module frame 30 and the end plate 40.

Further, the upper part and the lower part of the elastic member 700 are opened and thus, se the upper surface and the lower surface of the battery cell stack 200 are exposed to the outside. However, because it is more effective for heat dissipation than being surrounded by the module frame, the cooling performance can be improved. Here, the upper surface means a surface of the battery cell stack 200 in the z-axis direction, and the lower surface means a surface of the battery cell stack 200 in the -z-axis direction.

On the other hand, the material of such an elastic member 700 is not particularly limited as long as it has a predetermined elastic force, and as an example, it may include at least one of a polymer composite material, a composite material such as fiber-reinforced plastic (FRB), and a metal alloy.

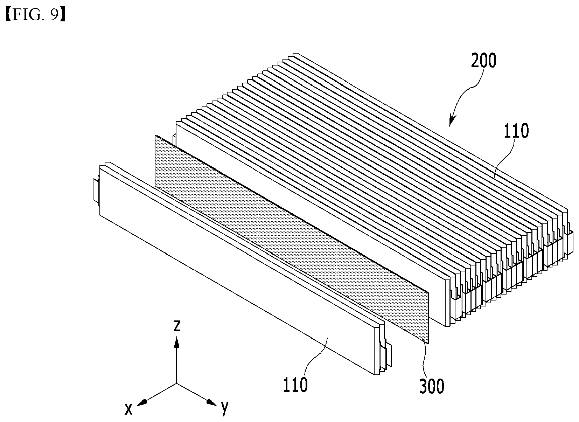

Fig. 9 is a perspective view showing a battery cell stack and cooling fins included in the battery module of Fig. 5.

Referring to Figs. 5 and 9, the battery module 100 according to the present embodiment may further include a cooling fin 300 located between the battery cells 110. Although only one cooling fin 300 is illustrated in Figs. 5 and 9, all of the cooling fins 300 according to the present embodiment can be located between the battery cells 110.

The cooling fin 300 may include a metal material having high thermal conductivity. The specific material is not limited, and as an example, aluminum (Al) may be included. Cooling fins 300 having high thermal conductivity may be arranged between the battery cells 110 and directly attached to widen the cooling area. Thereby, the cooling performance is improved.

As described above, the lower part of the elastic member 700 is opened and thus, the lower surface of the battery cell stack 200 is exposed to the outside, wherein the cooling fins 300 according to the present embodiment may protrude from the lower surface of the battery cell stack 200. Thereby, the cooling fins 300 according to the present embodiment may come into direct contact with a thermal conductive resin layer described later. The cooling fin 300 arranged between the battery cells 110 comes into direct contact with the thermal conductive resin layer, so that the heat discharge performance of the battery module can be maximized.

Meanwhile, referring to Figs. 4 and 5 again, the battery module 100 according to the present embodiment may further include a plate-shaped side surface pad 600 located between the both side surfaces of the battery cell stack 200 and the elastic member 700. Instead of removing the module frame and the end plate, side surface pads 600 are arranged on both sides of the battery cell stack 200 to supplement the stiffness of the battery module 100, and a buffering function can be performed between the battery cell 110 and the elastic member 700. A pad made of a foam material may be applied to the side surface pad 600.

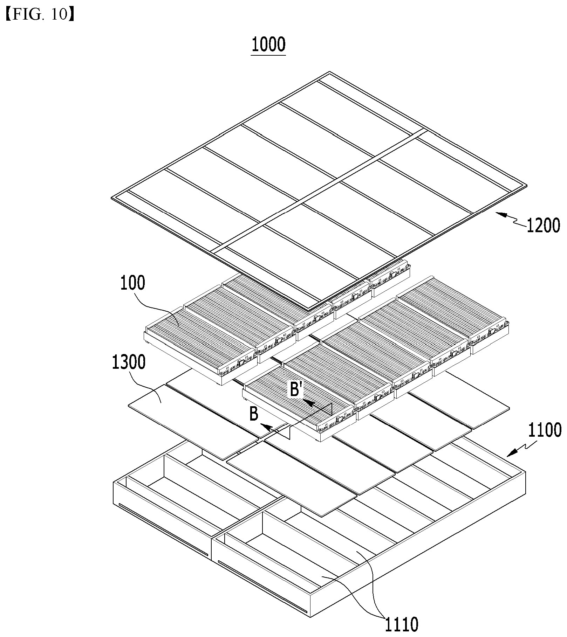

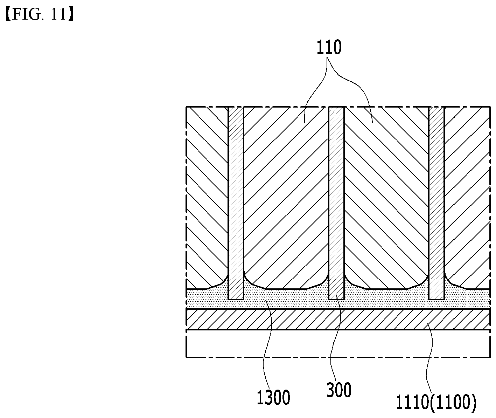

Next, a battery pack according to an embodiment of the present disclosure will be described in detail with reference to Figs. 10 and 11.

Fig. 10 is a perspective view showing a battery pack formed by gathering a plurality of battery modules of Fig. 4. Fig. 11 is a cross-sectional view showing a cross section taken along the cutting line B-B' of Fig. 10. Wherein, Fig. 11 shows a cross section thereof, assuming that the battery module 100, the thermal conductive resin layer 1300 and the bottom part 1110 of the pack frame 1100 in Fig. 10 are in a state of being in contact with each other, unlike those shown in Fig. 10.

Referring to Figs. 10 and 11, the battery pack 1000 according to an embodiment of the present disclosure may include a battery module 100, a pack frame 1100 for housing the battery module 100 and a thermal conductive resin layer 1300 located between the battery module 100 and the bottom part 1110 of the pack frame 1100.

The battery module 100 includes a battery cell stack 200, first and second sensing blocks 410 and 420, and an elastic member 700 as described above. Since the details of the battery module 100 overlaps with the contents described above, a further description will be omitted.

The battery pack 1000 may further include an upper cover 1200 for covering the pack frame 1100. That is, a plurality of battery modules 100 may be housed between the pack frame 1100 and the upper cover 1200.

The thermal conductive resin layer 1300 can be formed by applying a thermal conductive resin onto the bottom part 1110. Specifically, the thermal conductive resin is applied onto the bottom part 1110, the battery module 100 according to the present embodiment is located thereon, and then the thermal conductive resin is cured to form the thermal conductive resin layer 1300.

The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing a plurality of battery cells 110 constituting the battery cell stack 200. Further, since the thermal conductive resin has excellent heat transfer properties, it is possible to quickly transfer the heat generated in the battery module 100 to the bottom part 1110 and thus prevent the battery pack 1000 from overheating.

Referring to Figs. 4, 10 and 11, as described above, the battery module 100 according to the present embodiment may form a module-less structure in which the module frame and the end plate are removed, and the lower part of the elastic member 700 is opened so that a lower part of the battery cell stack 200 is exposed. In the battery pack 1000, the lower surface of the battery cell stack 200 comes into contact with the thermal conductive resin layer 1300. Thus, the heat generated in the battery cell 110 may be immediately transferred to the bottom part 1110 of the pack frame 1100 via the thermal conductive resin layer 1300. In the case of conventional battery module 10 having a module frame 30, since the heat generated from the battery cell is discharged to the outside of the battery module through several layers, the heat transfer path is complicated. That is, it is difficult to effectively transfer the heat generated from the battery cell, and a fine air layer, such as an air gap, that may be formed between the layers may interfere with heat transfer. Unlike the same, since the battery cell 110 according to the present embodiment comes into direct contact with the thermal conductive resin layer 1300 as shown in Fig. 11, the heat transfer path in the lower direction of the battery module 100 may be simplified, and the possibility of generating an air layer such as an air gap can be reduced. Therefore, it is possible to increase the cooling performance of the battery module 100 and the battery pack 1000 including the same.

Further, the cooling fin 300 according to the present embodiment is extended from the lower surface of the battery cell stack 200 to come into contact with the thermal conductive resin layer 1300. Since the lower surface of the battery cell stack 200 is exposed, the cooling fin 300 located between the battery cells 110 can come into direct contact with the thermal conductive resin layer 1300 on the bottom part 1110. By configuring the cooling fins 300 facing the battery cells 110 so as to be in direct contact with the thermal conductive resin layer 1300, the heat discharge performance can be maximized.

Meanwhile, in the module-less structure in which the module frame is removed, it is essential to fix the battery cell 110 exposed for structural safety. Therefore, in the battery pack 1000 according to the present embodiment, since each battery cell 110 constituting the battery module 100 is fixed while being in contact with the thermal conductive resin layer 1300, the structural safety can be supplemented..

In addition, the unnecessary cooling structure can be removed, thereby reducing the cost. Further, since the number of parts in the height direction of the battery pack 1000 is reduced, the space utilization rate can be increased, so that the capacity or output of the battery module can be increased.

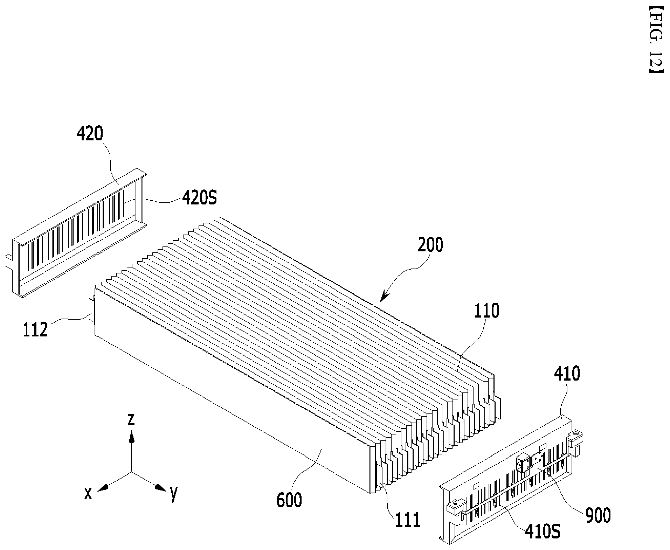

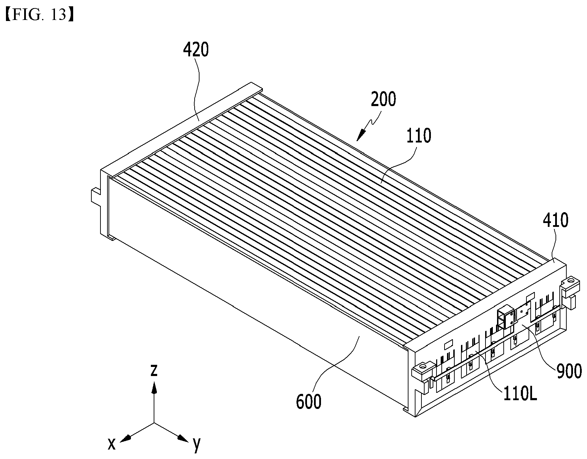

Next, a method for manufacturing the battery module 100 according to an embodiment of the present disclosure will be described in detail with reference to Figs. 12 to 14 and the like. However, parts overlapping with the contents described above will be omitted in order to avoid repetition of the explanation.

Figs. 12 to 14 are perspective views for explaining a method for manufacturing a battery module according to an embodiment of the present disclosure.

Referring to Figs. 6, 9 and 12, a method for manufacturing a battery module 100 according to an embodiment of the present disclosure includes a step of stacking a plurality of battery cells 110 including electrode leads 111 and 112 to manufacture a battery cell stack 200, and a step of arranging a first sensing block 410 and a second sensing block 420 so as to cover the front surface and the rear surface of the battery cell stack 200 from which the electrode leads 111 and 112 protrude, respectively.

Side surface pads 600 may be arranged on both side surfaces of the battery cell stack 200 to supplement stiffness, and a cooling fin 300 may be arranged between the battery cells 110 for cooling and heat dissipation. In some cases, an adhesive member such as a double-sided tape may be arranged between the battery cell 110 and the side surface pad 600 or between the battery cell 110 and the cooling fin 300.

Next, referring to Figs. 6, 8, 12 and 13, the method for manufacturing method the battery module 100 according to the present embodiment includes a step of passing the electrode leads 111 and 112 via a slit 410S of the first sensing block 410 or a slit 420S of the second sensing block 420 and then joining at least two electrode leads 111 and 112 to each other to form an electrode lead assembly 110L.

At this time, the LV sensing assembly 900 may be located in at least one of the first sensing block 410 and the second sensing block 420. As described above, the LV sensing assembly 900 may include an LV connector 910, a connection member 920, and a bonding plate 930. The detailed contents are omitted in order to avoid a repetition of the description.

The method for manufacturing a battery module 100 according to an embodiment of the present disclosure includes a step of connecting the LV sensing assembly 900 and the electrode lead assembly 110L. Specifically, in the step of forming the electrode lead assembly 110L, the joining plate 930 of the LV sensing assembly 900 may be joined to the electrode lead assembly 110L together with the formation of the electrode lead assembly 110L. Weld-joining can be applied to both the joining between the electrode leads 111 and 112 for forming the electrode lead assembly 110L or the joining between the electrode lead assembly 110L and the joining plate 930. By performing these two welding processes simultaneously, the productivity can be improved. That is, the HV connection and the LV connection can be simultaneously realized.

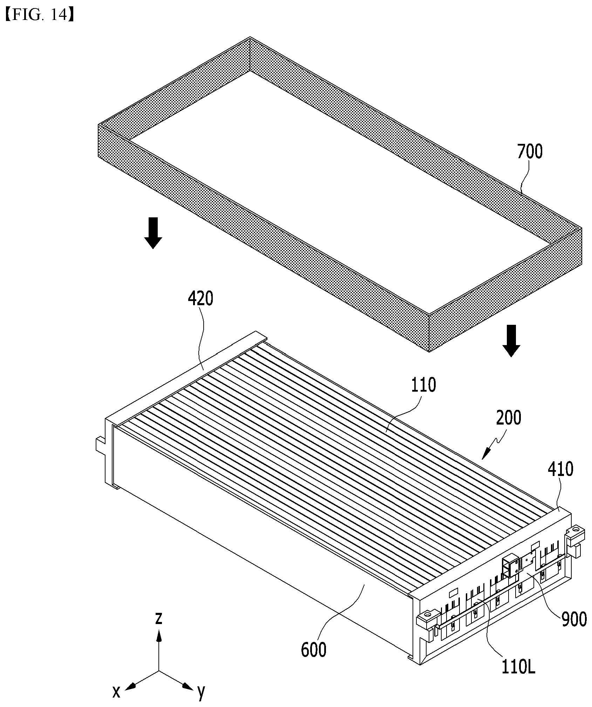

Next, referring to Fig. 14, in the method for manufacturing the battery module 100 according to the present embodiment include a step of arranging an elastic member 700 so as to cover both side surfaces of the first sensing block 410, the second sensing block 420, and the battery cell stack 200. That is, the elastic member 700 may be continuously connected along both side surfaces of the first sensing block 410, the second sensing block 420, and the battery cell stack 200. At this time, as described above, structurally, since the electrode lead assembly 110L is located outside the first sensing block 410 or the second sensing block 420, the elastic member 700 covers the electrode lead assembly 110L and further the LV sensing assembly 900. Since the elastic member 700 covers the electrode lead assembly 110L and the LV sensing assembly 900, it is possible to protect the electrode lead assembly 110L and the LV sensing assembly 900 from the external environment.

Although the terms representing directions such as front, rear, left, right, upper and lower directions are used in the present embodiment, these merely represent for convenience of explanation, and may differ depending on a position of an object, a position of an observer, or the like.

The one or more battery modules according to an embodiment of the present disclosure described above may be mounted together with various control and protection systems such as BMS (battery management system) and a cooling system to form a battery pack.

The battery module or the battery pack can be applied to various devices. Such a device can be applied to a vehicle means such as an electric bicycle, an electric vehicle, or a hybrid vehicle, but the present disclosure is not limited thereto, and is applicable to various devices that can use a secondary battery.

Although preferred embodiments of the present disclosure have been described in detail above, the scope of the present disclosure is not limited thereto, and various modifications and improvements made by those skilled in the art using the basic concepts of the present disclosure, which are defined in the appended claims.

### [Description of Reference Numerals]

100: battery module
200: battery cell stack
410: first sensing block
420: second sensing block
700: elastic member

## Claims

1. A battery module (100) comprising:
a battery cell stack (200) in which a plurality of battery cells including electrode leads (111, 112) are stacked;
a first sensing block (410) and a second sensing block (420) that cover the front surface and the rear surface of the battery cell stack (200) in which the electrode leads (111, 112) protrude, respectively; and
an elastic member (700) that covers the first sensing block (410), the second sensing block (420), and both side surfaces of the battery cell stack (200), and has an elastic force,
wherein at least two of the electrode leads (111, 112) are bent and joined after passing through a slit (410S) of the first sensing block (410) or a slit (420S) of the second sensing block (420) to form an electrode lead assembly (110L),
wherein the elastic member (700) covers the electrode lead assembly (110L),
wherein the elastic member (700) is continuously connected along the first sensing block (410), the second sensing block (420), and both side surfaces of the battery cell stack (200), and
wherein an upper surface and a lower surface of the battery cell stack (200) are exposed.

2. The battery module according to claim 1, comprising:
an LV (Low Voltage) sensing assembly for transmitting voltage information of the battery cell (110),
wherein the LV sensing assembly (900) is located in at least one of the first sensing block (410) and the second sensing block (420).

3. The battery module according to claim 2, wherein:
the LV sensing assembly (900) is connected to the electrode lead assembly (110L).

4. The battery module according to claim 3, wherein:
the LV sensing assembly (900) includes an LV connector (910); a connection member (920) that connects the LV connector (910) and the electrode lead assembly (110L); and a joining plate (930) located at one end of the connection member (920) and joined to the electrode lead assembly (110L).

5. The battery module (100) according to claim 4, wherein:
the connection member (920) is a flexible printed circuit board (FPCB) or a flexible flat cable (FFC).

6. A battery pack (1000) comprising:
the battery module (100) according to claim 1;
a pack frame (1100) that houses the battery module (100); and
a thermal conductive resin layer (1300) that is located between the battery module (100) and the bottom part (1110) of the pack frame (1100),
wherein the elastic member (700) is opened in its lower part, so that the lower surface of the battery cell stack (200) is exposed.

7. The battery pack (1000) according to claim 6, wherein:
the lower surface of the battery cell stack (200) is in contact with the thermal conductive resin layer (1300).

8. A method for manufacturing a battery module (100), the method comprising the steps of:
stacking a plurality of battery cells including electrode leads (111, 112) to manufacture a battery cell stack (200);
arranging a first sensing block (410) and a second sensing block (420) so as to cover the front surface and the rear surface of the battery cell stack (200) in which the electrode leads (111, 112) protrude, respectively;
passing the electrode lead (111, 112) via a slit (410S, 420S) of the first sensing block (410) or a slit (410S, 420S) of the second sensing block (420) and then bending and joining at least two of the electrode leads (111, 112) to each other to form an electrode lead assembly (110L); and
arranging an elastic member (700) having an elastic force so as to cover the first sensing block (410), the second sensing block (420), and both side surfaces of the battery cell stack (200),
wherein the elastic member (700) covers the electrode lead assembly (110L),
the elastic member (700) is continuously connected along the first sensing block (410), the second sensing block (420), and both side surfaces of the battery cell stack (200), and
wherein an upper surface and a lower surface of the battery cell stack (200) are exposed.

9. The method for manufacturing a battery module (100) according claim 8, wherein:
an LV (Low Voltage) sensing assembly for transmitting voltage information of the battery cell (110) is located in at least one of the first sensing block (410) and the second sensing block (420).

10. The method for manufacturing a battery module (100) according claim 9, further comprising:
connecting the LV sensing assembly (900) and the electrode lead assembly (110L).

11. The method for manufacturing a battery module (100) according claim 10, wherein:
the LV sensing assembly (900) includes an LV connector (910); a connection member (920) that connects the LV connector (910) and the electrode lead assembly (110L); and a joining plate (930) located at one end of the connection member (920) and joined to the electrode lead assembly (110L), and
in the step of connecting the LV sensing assembly (900) and the electrode lead assembly (110L), the joining plate (930) is joined to the electrode lead assembly (110L).

## Patentansprüche

1. Batteriemodul (100) aufweisend:
einen Batteriezellenstapel (200), in dem mehrere Batteriezellen mit Elektrodenleitungen (111, 112) gestapelt sind;
einen ersten Erfassungsblock (410) und einen zweiten Erfassungsblock (420), die die vordere Oberfläche und die hintere Oberfläche des Batteriezellenstapels (200) abdecken, in denen die Elektrodenleitungen (111, 112) jeweilig vorstehen; und
ein elastisches Element (700), das den ersten Erfassungsblock (410), den zweiten Erfassungsblock (420) und beide Seitenoberflächen des Batteriezellenstapels (200) abdeckt und eine elastische Kraft aufweist,
wobei mindestens zwei der Elektrodenleitungen (111, 112) gebogen und verbunden sind, nachdem sie durch einen Schlitz (410S) des ersten Erfassungsblocks (410) oder einen Schlitz (420S) des zweiten Erfassungsblocks (420) verlaufen, um eine Elektrodenleitungsanordnung (11oL) zu bilden,
wobei das elastische Element (700) die Elektrodenleitungsanordnung (11oL) abdeckt,
wobei das elastische Element (700) kontinuierlich entlang des ersten Erfassungsblocks (410), des zweiten Erfassungsblocks (420) und beider Seitenoberflächen des Batteriezellenstapels (200) verbunden ist, und
wobei eine obere Oberfläche und eine untere Oberfläche des Batteriezellenstapels (200) freiliegen.

2. Batteriemodul nach Anspruch 1, aufweisend:
eine Niederspannungserfassungsanordnung, LV-Erfassungsanordnung, zum Übertragen von Spannungsinformationen der Batteriezelle (110),
wobei die LV-Erfassungsanordnung (900) in mindestens einem von dem ersten Erfassungsblock (410) und dem zweiten Erfassungsblock (420) angeordnet ist.

3. Batteriemodul nach Anspruch 2, wobei:
die LV-Erfassungsanordnung (900) mit der Elektrodenleitungsanordnung (11oL) verbunden ist.

4. Batteriemodul nach Anspruch 3, wobei:
die LV-Erfassungsanordnung (900) aufweist: einen LV-Verbinder (910); ein Verbindungselement (920), das den LV-Verbinder (910) und die Elektrodenleitungsanordnung (11oL) verbindet; und eine Verbindungsplatte (930), die sich an einem Ende des Verbindungselements (920) befindet und mit der Elektrodenleitungsanordnung (11oL) verbunden ist.

5. Batteriemodul (100) nach Anspruch 4, wobei:
das Verbindungselement (920) eine flexible Leiterplatte (FPCB) oder ein flexibles Flachkabel (FFC) ist.

6. Batteriepack (1000) aufweisend:
das Batteriemodul (100) nach Anspruch 1;
einen Packrahmen (1100), der das Batteriemodul (100) aufnimmt; und
eine thermisch leitfähige Harzschicht (1300), die zwischen dem Batteriemodul (100) und dem Bodenteil (1110) des Packrahmens (1100) angeordnet ist,
wobei das elastische Element (700) in seinem unteren Teil geöffnet ist, so dass die untere Oberfläche des Batteriezellenstapels (200) freiliegt.

7. Batteriepack (1000) nach Anspruch 6, wobei:
die untere Oberfläche des Batteriezellenstapels (200) in Kontakt mit der thermisch leitfähigen Harzschicht (1300) ist.

8. Verfahren zum Herstellen eines Batteriemoduls (100), wobei das Verfahren die Schritte aufweist:
Stapeln mehrerer Batteriezellen mit Elektrodenleitungen (111, 112), um einen Batteriezellenstapel (200) herzustellen;
Anordnen eines ersten Erfassungsblocks (410) und eines zweiten Erfassungsblocks (420), um die vordere Oberfläche und die hintere Oberfläche des Batteriezellenstapels (200) abzudecken, in denen die Elektrodenleitungen (111, 112) jeweilig vorstehen;
Hindurchführen der Elektrodenleitung (111, 112) durch einen Schlitz (410S, 420S) des ersten Erfassungsblocks (410) oder einen Schlitz (410S, 420S) des zweiten Erfassungsblocks (420) und dann Biegen und Verbinden von mindestens zwei der Elektrodenleitungen (111, 112) miteinander, um eine Elektrodenleitungsanordnung (110L) zu bilden; und
Anordnen eines elastischen Elements (700), das elastische Kraft aufweist, so dass es den ersten Erfassungsblock (410), den zweiten Erfassungsblock (420) und beide Seitenoberflächen des Batteriezellenstapels (200) abdeckt,
wobei das elastische Element (700) die Elektrodenleitungsanordnung (11oL) abdeckt,
das elastische Element (700) kontinuierlich entlang des ersten Erfassungsblocks (410), des zweiten Erfassungsblocks (420) und beider Seitenoberflächen des Batteriezellenstapels (200) verbunden ist, und
wobei eine obere Oberfläche und eine untere Oberfläche des Batteriezellenstapels (200) freiliegen.

9. Verfahren zum Herstellen eines Batteriemoduls (100) nach Anspruch 8, wobei:
eine Niederspannungserfassungsanordnung, LV-Erfassungsanordnung, zum Übertragen von Spannungsinformationen der Batteriezelle (110) in mindestens einem von dem ersten Erfassungsblock (410) und dem zweiten Erfassungsblock (420) angeordnet ist.

10. Verfahren zum Herstellen eines Batteriemoduls (100) nach Anspruch 9, ferner aufweisend:
Verbinden der LV-Erfassungsanordnung (900) und der Elektrodenleitungsanordnung (110L).

11. Verfahren zum Herstellen eines Batteriemoduls (100) nach Anspruch 10, wobei:
die LV-Erfassungsanordnung (900) aufweist: einen LV-Verbinder (910); ein Verbindungselement (920), das den LV-Verbinder (910) und die Elektrodenleitungsanordnung (11oL) verbindet; und eine Verbindungsplatte (930), die sich an einem Ende des Verbindungselements (920) befindet und mit der Elektrodenleitungsanordnung (11oL) verbunden ist, und
in dem Schritt des Verbindens der LV-Erfassungsanordnung (900) und der Elektrodenleitungsanordnung (11oL) die Verbindungsplatte (930) mit der Elektrodenleitungsanordnung (11oL) verbunden wird.

## Revendications

1. Module de batterie (100) comprenant :
un empilement de cellules de batterie (200) dans lequel une pluralité de cellules de batterie comprenant des conducteurs d'électrode (111, 112) sont empilées ;
un premier bloc de détection (410) et un deuxième bloc de détection (420) couvrant la surface antérieure et la surface postérieure de l'empilement de cellules de batterie (200) desquelles dépassent respectivement les fils d'électrode (111, 112) ; et
un élément élastique (700) couvrant le premier bloc de détection (410), le deuxième bloc de détection (420), et les deux surfaces latérales de l'empilement de cellules de batterie (200), et possédant une force élastique,
au moins deux des conducteurs d'électrode (111, 112) étant pliés et joints après être passés à travers une fente (410S) du premier bloc de détection (410) ou une fente (420S) du deuxième bloc de détection (420) pour former un ensemble de conducteur d'électrode (110L),
l'élément élastique (700) recouvrant l'ensemble de conducteur d'électrode (110L),
l'élément élastique (700) étant connecté en continu le long du premier bloc de détection (410), du deuxième bloc de détection (420), et des deux surfaces latérales de l'empilement de cellules de batterie (200), et
une surface supérieure et une surface inférieure de l'empilement de cellules de batterie (200) étant exposées.

2. Module de batterie selon la revendication 1, comprenant:
un ensemble de détection BT (basse tension) pour transmettre des informations sur la tension de la cellule de batterie (110),
l'ensemble de détection BT (900) étant situé dans au moins un du premier bloc de détection (410) et du deuxième bloc de détection (420).

3. Module de batterie selon la revendication 2,
l'ensemble de détection BT (900) étant connecté à l'ensemble de connecteurs d'électrode (110L).

4. Module de batterie selon la revendication 3,
l'ensemble de détection BT (900) comprenant un connecteur BT (910) ; un élément de connexion (920) reliant le connecteur BT (910) et l'ensemble de conducteur d'électrode (110L) ; et une plaque d'assemblage (930) située à un bout de l'élément de connexion (920) et jointe à l'ensemble de conducteur d'électrode (110L).

5. Module de batterie (100) selon la revendication 4,
l'élément de connexion (920) étant une carte de circuit imprimé flexible (FPCB) ou un câble plat flexible (FFC).

6. Bloc-batterie (1000), comprenant :
Module de batterie (100) selon la revendication 1,
un châssis de bloc (1100) contenant le module de batterie (100) ; et
une couche de résine conductrice thermique (1300) située entre le module de batterie (100) et la partie inférieure (1110) du châssis du bloc (1100),
l'élément élastique (700) étant ouvert dans sa partie inférieure, de sorte que la surface inférieure de l'empilement de cellules de batterie (200) soit exposée.

7. Bloc-batterie (1000) selon la revendication 6,
la surface inférieure de l'empilement de cellules de batterie (200) se trouvant au contact de la couche de résine conductrice thermique (1300).

8. Procédé de fabrication d'un module de batterie (100), le procédé comprenant les étapes
d'empilement d'une pluralité de cellules de batterie comprenant des conducteurs d'électrode (111, 112) pour fabriquer un empilement de cellules de batterie (200) ;
d'agencement d'un premier bloc de détection (410) et d'un deuxième bloc de détection (420) de façon à couvrir la surface antérieure et la surface postérieure de l'empilement de cellules de batterie (200) desquelles dépassent respectivement les conducteurs d'électrode (111, 112) ;
de passage du conducteur d'électrode (111, 112) par une fente (410S, 420S) du premier bloc de détection (410) ou une fente (410S, 420S) du deuxième bloc de détection (420), puis pliage et assemblage l'une à l'autre d'au moins deux des conducteurs d'électrode (111, 112) pour former un ensemble de conducteur d'électrode (110L), et
d'agencement d'un élément élastique (700) doté d'une force élastique de façon à couvrir le premier bloc de détection (410), le deuxième bloc de détection (420), et les deux surfaces latérales de l'empilement de cellules de batterie (200),
l'élément élastique (700) recouvrant l'ensemble de conducteur d'électrode (110L),
l'élément élastique (700) étant connecté en continu le long du premier bloc de détection (410), du deuxième bloc de détection (420), et des deux surfaces latérales de l'empilement de cellules de batterie (200), et
une surface supérieure et une surface inférieure de l'empilement de cellules de batterie (200) étant exposées.

9. Procédé de fabrication d'un module de batterie (100) selon la revendication 8,
un ensemble de détection BT (basse tension) pour la transmission d'informations sur la tension de la cellule de batterie (110) étant situé dans au moins un du premier bloc de détection (410) et du deuxième bloc de détection (420).

10. Procédé de fabrication d'un module de batterie (100) selon la revendication 9, comprenant en outre:
la connexion d'un ensemble de détection BT (900) et de l'ensemble de connecteur d'électrode (110L).

11. Procédé de fabrication d'un module de batterie (100) selon la revendication 10,
l'ensemble de détection BT (900) comprenant un connecteur BT (910) ; un élément de connexion (920) reliant le connecteur BT (910) et l'ensemble de conducteur d'électrode (110L) ; et une plaque d'assemblage (930) située à un bout de l'élément de connexion (920) et jointe à l'ensemble de conducteur d'électrode (110L), et
à l'étape de connexion de l'ensemble de détection BT (900) et de l'ensemble de conducteur d'électrode (110L), la plaque d'assemblage (930) étant jointe à l'ensemble de conducteur d'électrode (110L).
